# EUROPEAN PATENT APPLICATION

(11) **EP 2 549 485 A1**
(43) Date of publication of application: **23.01.2013**
(21) Application number: 11755972.4
(22) Date of filing: 28.01.2011
(51) Int. Cl.: G21D 3/04, G21C 9/004, G21C 15/18, G21D 1/00, H02J 9/08

(54) **EMERGENCY SYSTEM**

(30) Priority: 18.03.2010 JP 2010063326
(71) Applicant: Mitsubishi Heavy Industries, Ltd., Tokyo 108-8215 (JP)
(72) Inventor: NIIDA, Shinji, Minato-ku, Tokyo 108-8215 (JP)
(74) Representative: Intès, Didier Gérard André
(86) International application number: PCT/JP2011/051795
(87) International publication number: WO 2011/114782

(57) **Abstract**

An emergency system capable of supplying power to a nuclear facility when loss of power from an external power supply that can supply power to the nuclear facility occurs, includes a gas turbine generator (35) serving as an emergency power supply that can supply power to the nuclear facility, a separation valve (38) that can separate the interior and the exterior of the containment vessel (10) from each other at a time of an accident in the nuclear facility, a battery (39) that can supply power to the separation valve (38) at a time of loss of the power from the external power supply, and a control device (32) that can control operations of the gas turbine generator (35), the separation valve (38), and the battery (39), wherein when loss of the power from the external power supply and an accident in the nuclear facility occur, the control device (32) starts the gas turbine generator (35) and closes the separation valve (38) to which power is supplied from the battery (39).

## Description

### Field

The present invention relates to an emergency system including an emergency power supply that is used when loss of power supplied from an external power supply to a nuclear facility occurs.

### Background

There is conventionally known, as an emergency power supply used during loss of power from an external power supply to a nuclear facility, an emergency power supply in which an auxiliary power generator is driven by an auxiliary steam turbine (see, for example, Patent Literature 1). This emergency power supply generates power by using steam generated within the nuclear reactor pressure vessel, and it is possible to actuate air conditioners, various controllers, and motor-operated valves with the generated power.

### Citation List

### Patent Literature

Patent Literature 1: Japanese Patent Application National Laid-open No. H5-509165

### Summary

### Technical Problem

Meanwhile, a containment vessel that can contain a nuclear reactor and pipes communicating the interior of the containment vessel with the exterior thereof are provided in a nuclear facility. Fluid within the pipes flows between the interior and the exterior of the containment vessel. It is necessary to be able to separate the interior and the exterior of the containment vessel from each other so as to ensure the safety of the nuclear facility on the assumption that an accident in the nuclear facility should occur. Therefore, in the nuclear facility, separation valves are interposed in each of the pipes both on the inside and the outside of the containment vessel across the containment vessel wall, and closed when an accident occurs in the nuclear facility. These separation valves are normally operable with the power supplied from an external power supply. However, even when loss of the power supplied from the external power supply occurs, it is still required to ensure that the separation valves remain operational for the safety design of the nuclear facility. Accordingly, the separation valves are configured to be operable with the power supplied from the emergency power supply. That is, the separation valves are configured to be operable with the power supplied from the emergency power supply on the assumption that an accident in the nuclear facility and the loss of the power supplied from the external power supply should occur simultaneously.

If a steam turbine generator disclosed in Patent Literature 1 is used as the emergency power supply, the steam turbine generator has a characteristic that it takes a long time until the power reaches rated power, as compared with a diesel engine generator frequently used as the emergency power supply. This characteristic also applies to a gas turbine generator. Therefore, when the separation valves are closed by the use of power generated by the gas turbine generator, closing of the separation valves may be delayed.

Therefore, an object of the present invention is to provide an emergency system that can appropriately separate the interior and the exterior of the containment vessel from each other by promptly closing the separation valves while using a gas turbine generator as an emergency power supply.

### Solution to Problem

According to an aspect of the present invention, an emergency system capable of supplying power to a nuclear facility including a containment vessel in which a nuclear reactor can be contained, when loss of power from an external power supply that can supply the power to the nuclear facility occurs, includes: a gas turbine generator serving as an emergency power supply that can supply power to the nuclear facility; a separation valve that can separate the interior and the exterior of the containment vessel from each other at a time of an accident in the nuclear facility; a battery that can supply power to the separation valve at a time of loss of the power from the external power supply; and a control device that can control operations of the gas turbine generator and the separation valve. When loss of the power from the external power supply and an accident in the nuclear facility occur, the control device starts the gas turbine generator and closes the separation valve to which the power is supplied from the battery.

According to this configuration, when loss of power from the external power supply and an accident in the nuclear facility occur, the power is supplied from the battery to the separation valve. Therefore, the control device can control the separation valve to be closed even before the power of the gas turbine generator reaches rated power. It is thereby possible to swiftly separate the interior of the containment from the exterior thereof.

Advantageously, the emergency system further includes: an accumulator that can store cooling water in a pressurized state in an airtight container; and a water injection valve interposed in a channel from the accumulator to the nuclear reactor. At a time of an accident in the nuclear facility, the accumulator injects the cooling water in the pressurized state into the nuclear reactor via the injection valve.

According to this configuration, at the time of an accident in the nuclear facility, the accumulator can inject the cooling water stored in the accumulator toward the nuclear reactor because the water injection valve is open. It is thereby possible to cool the nuclear reactor and to safely stop the operation of the nuclear facility when an accident in the nuclear facility occurs.

Advantageously, in the emergency system, the accumulator is configured to be able to change a flow volume of the cooling water to be injected in multiple stages.

According to this configuration, the accumulator can inject the cooling water into the nuclear reactor at a flow volume exceeding a water-injection flow volume required when injecting the cooling water into the nuclear reactor. Accordingly, at the time of an accident in the nuclear facility, the accumulator can appropriately inject the cooling water into the nuclear reactor.

Advantageously, the emergency system further includes: a first switch that can open and close an electric circuit that connects the external power supply to an electric wire that can distribute power into the nuclear facility; and a second switch that can open and close an electric circuit that connects the battery to the separation valve. The control device transmits, when loss of the power from the external power supply and an accident in the nuclear facility occur, a containment vessel separation signal for closing the second switch and closing the separation valve with power supplied from the battery to separate the interior and the exterior of the containment vessel from each other, a generator starting signal for starting the gas turbine generator for power generation, a safety water-injection signal for opening the water injection valve and injecting the cooling water in the pressurized state into the nuclear reactor, and an external-power-supply cutoff signal for opening the first switch and cutting off the power from the external power supply to the nuclear facility.

According to this configuration, when loss of the power from the external power supply and the accident in the nuclear facility occur, the control device can transmit the containment vessel separation signal, the generator starting signal, the safety water-injection signal, and the external-power-supply breaker opening signal. Accordingly, the separation valve that is operated with the power supplied from the battery is promptly closed in response to the various signals transmitted from the control device, and thus the nuclear facility can be swiftly brought into a safe state.

Advantageously, the emergency system further includes a third switch that can open and close an electric circuit that connects the gas turbine generator to the electric wire. The control device closes the third switch and supplies power from the gas turbine generator to the electric wire when the power of the gas turbine generator reaches a rated power after transmitting the generator starting signal.

According to this configuration, after the power of the gas turbine generator reaches the rated power, the power can be transmitted toward the electric wire. Therefore, the gas turbine generator can stably supply power to the electric wire and appropriately distribute power into the nuclear facility.

Advantageously, the emergency system further includes a water injection apparatus including a pump that can feed cooling water toward the nuclear reactor. The pump can be driven with the power supplied from the gas turbine generator, and the control device starts the pump when the power of the gas turbine generator reaches the rated power.

According to this configuration, after loss of the power from the external power supply, when the power of the gas turbine generator reaches the rated power, the pump can feed the cooling water toward the nuclear reactor. Accordingly, the water injection apparatus can stably inject the cooling water into the nuclear reactor with the power supplied from the gas turbine generator.

Advantageously, in the emergency system, the emergency apparatus is an apparatus that includes at least the gas turbine generator, the separation valve, and the battery, and a plurality of the emergency apparatuses are provided.

According to this configuration, even when one of a plurality of emergency apparatuses does not operate due to a failure or the like, the rest of the emergency apparatuses can operate, so that it is possible to ensure the safety of the nuclear facility.

### Advantageous Effects of Invention

According to the emergency system of the present invention, even when loss of the power from an external power supply and an accident in the nuclear facility occur, power is supplied from a battery to separation valves. Therefore, it is possible to promptly close the separation valves even before the power of the gas turbine generator reaches rated power, and it is possible to swiftly separate the interior of the containment vessel from the exterior thereof.

### Brief Description of Drawings

FIG. 1 is a schematic configuration diagram of a nuclear facility including an emergency system according to an embodiment of the present invention.
FIG. 2 is a schematic plan view of the emergency system according to the embodiment.
FIG. 3 is an explanatory diagram of an emergency power supply system in the nuclear facility.
FIG. 4 is a schematic cross-sectional view of an accumulator.
FIG. 5 is a graph of flow characteristics of the accumulator.

### Description of Embodiments

Exemplary embodiments of an emergency system according to the present invention will be explained below in detail with reference to the accompanying drawings. The present invention is not limited to the following embodiment. In addition, constituent elements in the following embodiment include those that are replaceable or can easily be replaced by persons skilled in the art, or that are substantially identical.

### Embodiment

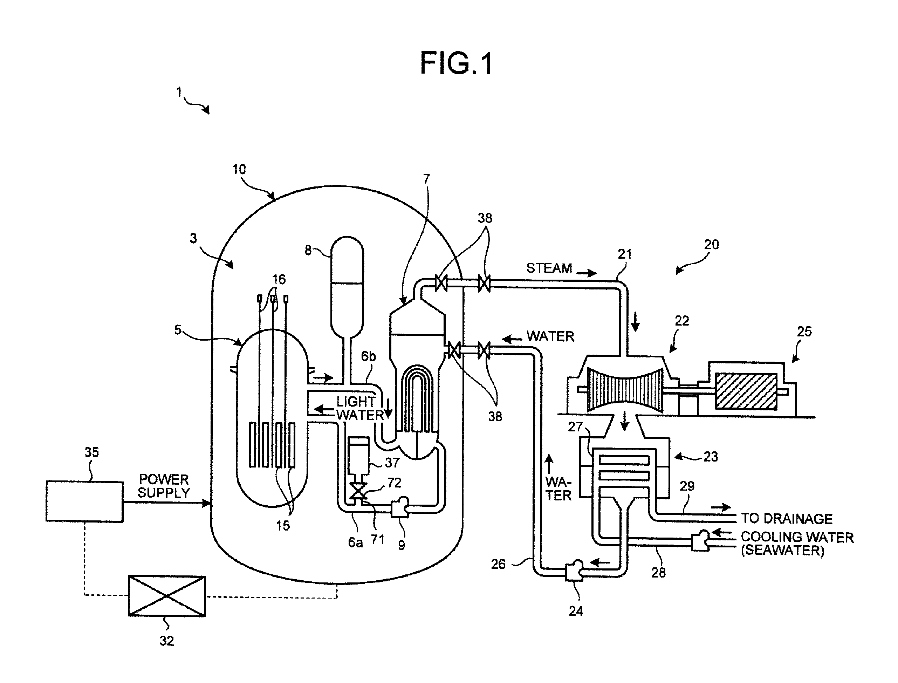

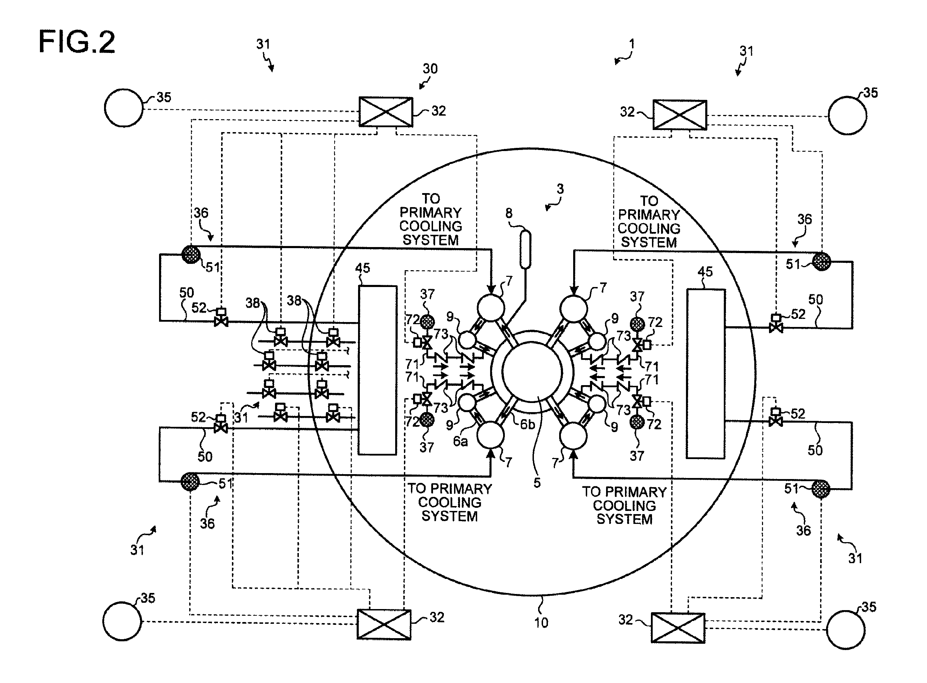

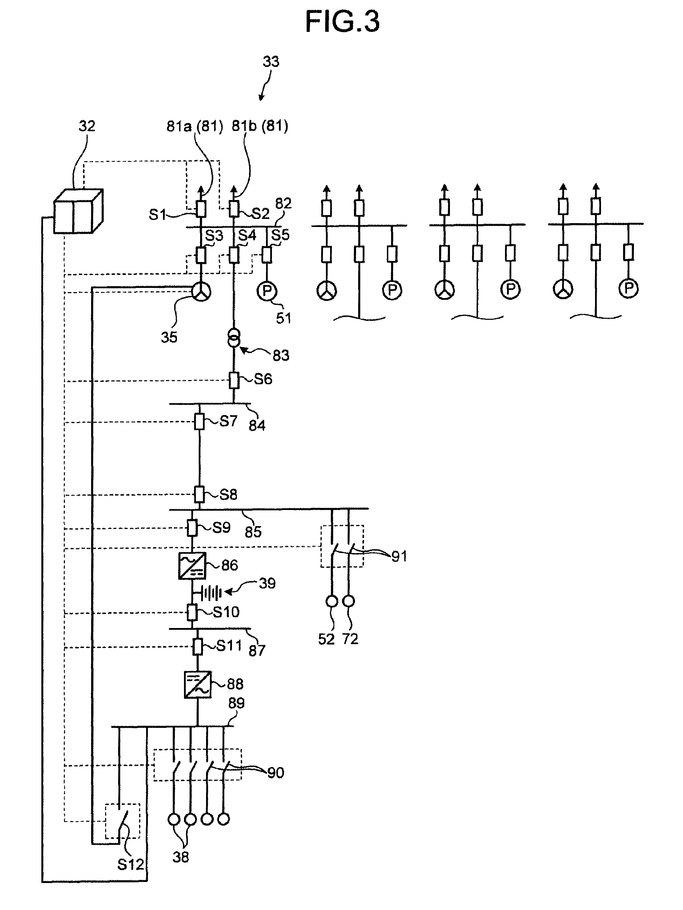

FIG. 1 is a schematic configuration diagram of a nuclear facility including an emergency system according to an embodiment of the present invention. FIG. 2 is a schematic plan view of the emergency system according to the present embodiment. FIG. 3 is an explanatory diagram of an emergency power supply system in the nuclear facility. An emergency system 30 according to the present embodiment is a system that includes emergency power supplies 35, each of which can supply power when loss of power supplied to a nuclear facility 1 from an external power supply occurs. The emergency system 30 can perform a separating operation for separating the interior and the exterior of the containment vessel, which contains a nuclear reactor 5, from each other and safety operations such as a water injecting operation for injecting cooling water into the nuclear reactor 5. Before explaining the emergency system 30, the nuclear facility 1 is explained.

As shown in FIGS. 1 and 2, the nuclear facility 1 uses a pressurized water reactor (PWR) as the nuclear reactor 5. In the nuclear reactor 5 of the PWR nuclear facility 1, after the primary coolant is heated, the heated primary coolant is fed to the steam generator 7 by the coolant pump 9. In the nuclear facility 1, the steam generator 7 boils the secondary coolant to generate steam by heat exchange between the heated primary coolant and the secondary coolant and feeds the secondary coolant (steam) to the turbine 22 to drive the power generator 25, thereby generating power.

The nuclear facility 1 includes the nuclear reactor 5, and a plurality of (four in the present embodiment) steam generators 7 (see FIG. 2), each connected to the nuclear reactor 5 via a pair of coolant pipes 6a and 6b constituted of the cold leg 6a and the hot leg 6b. That is, as shown in FIG. 2, the four steam generators 7 are arranged around the nuclear reactor 5. A pressurizer 8 is interposed in the hot leg 6b of one of the paired coolant pipes 6a and 6b, and the coolant pump 9 is interposed in the cold leg 6a of every paired coolant pipes. The nuclear reactor 5, the paired coolant pipes 6a and 6b, the four steam generators 7, the pressurizer 8, and the coolant pumps 9 constitute the primary cooling system 3 of the nuclear facility 1, and these constituent elements are accommodated in the containment vessel 10.

With the above configuration, the primary coolant flows from the nuclear reactor 5 to each of the steam generators 7 via the hot leg 6b. Thereafter, the primary coolant that has passed through each steam generator 7 and come out of there flows into the nuclear reactor 5 via the cold leg 6a. That is, the primary coolant circulates between the nuclear reactor 5 and the four steam generators 7. It should be noted that the primary coolant is light water used as a coolant and a neutron moderator.

The nuclear reactor 5 is the pressurized water reactor as described above, and the interior of the nuclear reactor 5 is filled with the primary coolant. Many fuel assemblies 15 are accommodated in the nuclear reactor 5, and many control rods 16, which control nuclear fission of the fuel assemblies 15, are provided in the nuclear reactor 5 in such a manner that they can be inserted into the fuel assemblies 15.

When nuclear fission is induced in the fuel assemblies 15 while the control rods 16 control a nuclear fission reaction, thermal energy is generated by this nuclear fission. The generated thermal energy heats the primary coolant, and the heated primary coolant is fed to each of the steam generators 7 via the hot leg 6b. On the other hand, the primary coolant coming from each steam generator 7 via the cold leg 6a flows into the nuclear reactor 5 and cools the interior of the nuclear reactor 5.

The pressurizer 8 interposed in the hot leg 6b suppresses the primary coolant from boiling by pressurizing the high-temperature primary coolant. Furthermore, each of the steam generators 7 boils the secondary coolant and generates steam by making the heat exchange of the high-temperature and high-pressure primary coolant with the secondary coolant, and cools the high-temperature and high-pressure primary coolant. Each of the coolant pumps 9 circulates the primary coolant in the primary cooling system 3, feeds the primary coolant from each steam generator 7 into the nuclear reactor 5 via the cold leg 6a, and feeds the primary coolant from the nuclear reactor 5 into each steam generator 7 via the hot leg 6b.

A series of operations performed by the primary cooling system 3 in the nuclear facility 1 is explained here. When the thermal energy generated by the nuclear fission reaction within the nuclear reactor 5 heats the primary coolant, the heated primary coolant is fed to each of the steam generators 7 via the hot leg 6b by each of the coolant pumps 9. The heated primary coolant passing through the hot leg 6b is suppressed from boiling by being pressurized by the pressurizer 8, and the primary coolant flows into each steam generator 7 in a high-temperature and high-pressure state. The high-temperature and high-pressure primary coolant flowing into each steam generator 7 is cooled by the heat exchange with the secondary coolant, and the cooled primary coolant is fed into the nuclear reactor 5 via the cold leg 6a by each coolant pump 9. The cooled primary coolant cools the nuclear reactor 5 by flowing into the nuclear reactor 5.

The nuclear facility 1 also includes the turbine 22 connected to each of the steam generators 7 via a steam pipe 21, a condenser 23 connected to the turbine 22, and feedwater pump 24 interposed in a feedwater pipe 26 that connects the condenser 23 to each of the steam generators 7. These constitute the secondary cooling system 20. The secondary coolant that circulates in the secondary cooling system 20 turns into gas (steam) in each steam generator 7 and returns from the gaseous state to liquid by the condenser 23. The power generator 25 is connected to the turbine 22. A pair of separation valves 38 are interposed in each of the steam pipe 21 and the feedwater pipe 26 across the wall of the containment vessel 10 to be located on the inside and the outside of the containment vessel 10, respectively. These separation valves 38 are configured to be closed when an accident occurs in the nuclear facility 1, and the interior and the exterior of the containment vessel 10 can be separated from each other by closing each separation valve 38.

A series of operations performed by the secondary cooling system 20 in the nuclear facility 1 is explained here. When the steam flows from each of the steam generators 7 into the turbine 22 via the steam pipe 21, the turbine 22 rotates. When the turbine 22 rotates, the power generator 25 coupled to the turbine 22 generates power. Thereafter, the steam that flows out of the turbine 22 flows into the condenser 23. Cooling pipes 27 is provided in the condenser 23, where the intake pipe 28 for supplying cooling water (seawater, for example) is connected to one end of the cooling pipes 27 and the drain pipe 29 for discharging the cooling water is connected to the other end of the cooling pipes 27. The condenser 23 condenses the steam to the liquid by cooling the steam flowing into the condenser 23 from the turbine 22 by the cooling pipes 27. The secondary coolant condensed back to the liquid is fed by the feedwater pump 24 to each of the steam generators 7 via the feedwater pipe 26. The secondary coolant fed to each steam generator 7 turns again into the steam by the heat exchange with the primary coolant in the steam generator 7.

Meanwhile, the nuclear facility 1 is provided with the emergency system 30 for the safe shutdown of the nuclear facility 1 on the assumption of loss of the power supplied to the nuclear facility 1 or an occurrence of an accident in the nuclear facility 1. As shown in FIG. 2, this emergency system 30 is condifured as four trains, which includes four emergency apparatuses 31 and four control devices 32 to control the four emergency apparatuses 31, respectively. Because the emergency apparatuses 31 are all equivalent in configuration and the control devices 32 are all equivalent in configuration, only one emergency apparatus 31 and only one control device 32 are explained below.

This emergency apparatus 31 is a so-called engineering safety features actuation apparatus, and includes a water injection apparatus 36, which supplies the cooling water to the primary cooling system 3, an accumulator 37, which injects the pressurized cooling water into the primary cooling system 3, the separation valves 38 described above, and emergency power supply systems 33, which supply power to these constituent elements of the emergency apparatus 31. The control device 32 generally controls these constituent elements of the emergency apparatus 31.

The water injection apparatus 36 pumps the cooling water from the water storage pit 45, which is provided in the containment vessel 10 and stores the cooling water, and injects the cooling water into the primary cooling system 3. The water injection apparatus 36 includes a first water injection pipe 50, which connects the water storage pit 45 to the primary cooling system 3, a water injection pump 51, which is interposed in the first water injection pipe 50, and a first water injection valve 52, which is interposed in the first water injection pipe 50 near the water storage pit 45 across the water injection pump 51. The first water injection valve 52 is a so-called motor-operated valve, and the water injection pump 51 and the first water injection valve 52 are connected to the control device 32. The control device 32 controls the water injection pump 51 and the first water injection valve 52 to inject the cooling water into the primary cooling system 3 when loss of the power from the external power supply and an accident in the nuclear facility 1 occur. The water injection pump 51 and the first water injection valve 52 are driven with the power supplied from the emergency power supply 35 in a case of the loss of the power from the external power supply. On the other hand, the water injection pump 51 and the first water injection valve 52 are driven with the power supplied from the external power supply when the loss of the power from the external power supply does not occur.

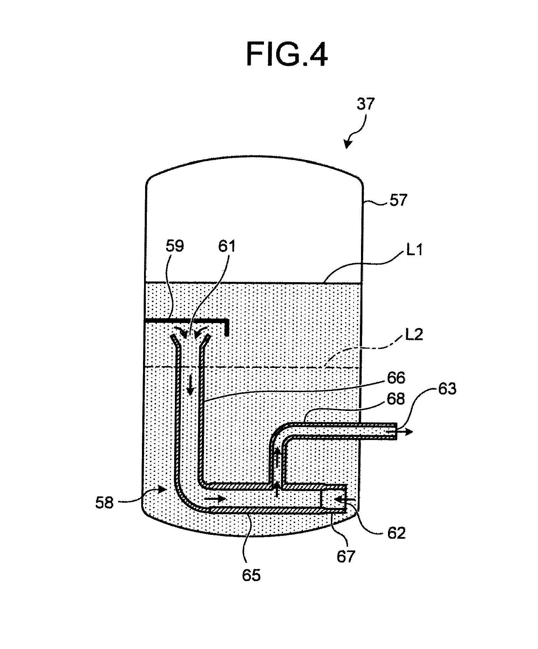

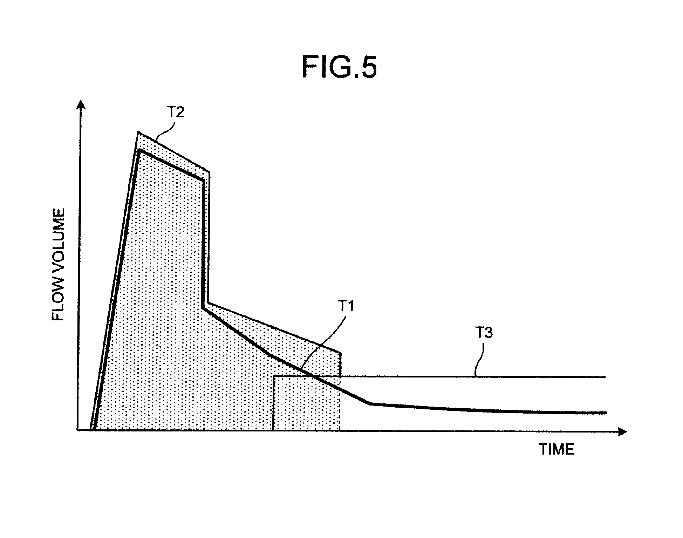

FIG. 4 is a cross-sectional view schematically depicting the accumulator, and FIG. 5 is a graph of flow characteristics of the accumulator. The accumulator 37 stores therein the pressurized cooling water, and injects the pressurized cooling water into the primary cooling system 3. This accumulator 37 is configured to be able to change a flow volume of the cooling water to be injected in multiple stages. Specifically, the accumulator 37 is capable of having the high flow volume stage, where the flow volume of the cooling water is high, and the low flow volume stage, where the flow volume of the cooling water is low. As shown in FIG. 4, this accumulator 37 is configured to include an airtight container 57, which can store therein the cooling water, an internal water injection channel 58 arranged within the airtight container 57, and a mount 59 attached to an inner wall of the airtight container 57.

An upper inflow port 61 formed vertically upward, a lower inflow port 62 formed vertically downward, and an outflow port 63, which is located between the upper inflow port 61 and the lower inflow port 62 and communicates with the exterior of the container, are formed in the internal water injection channel 58. The internal water injection channel 58 is configured to include a disc-like inflow damper 65, which is provided on the bottom of the airtight container 57 and includes an inflow space inside, an upper inflow channel 66, which communicates the upper inflow port 61 with an inflow space of the inflow damper 65, a lower inflow channel 67, which communicates the lower inflow port 62 with the inflow space of the damper 65, and an outflow channel 68, which communicates the inflow space of the damper 65 with the outflow port 63. The lower inflow channel 67 is connected to the disc-like inflow damper 65 in a tangential direction.

Therefore, when a water level of the cooling water stored in the airtight container 57 is the first water level L1 located higher than the upper inflow port 61, then the cooling water flows in the inflow damper 65 from the upper inflow port 61 via the upper inflow channel 66, and flows in the inflow damper 65 from the lower inflow port 62 via the lower inflow channel 67. The cooling water flowing in the inflow damper 65 flows out from the outflow port 63 via the outflow channel 68. Accordingly, when the cooling water is at the first water level L1, the cooling water flows in the inflow damper 65 both from the upper inflow port 61 and the lower inflow port 62. The cooling water that flows in the disc-like inflow damper 65 runs into the outflow channel 68 from the inflow damper 65 that is filled with the cooling water as a direct flow. Therefore, a large amount of the cooling water flows out from the outflow port 63 of the accumulator 37.

On the other hand, when the water level of the cooling water stored in the airtight container 57 is the second water level L2 located lower than the upper inflow port 61 and higher than the outflow port 63, then the cooling water does not flow in the inflow damper 65 from the upper inflow port 61 but flows in the inflow damper 65 from the lower inflow port 62 via the lower inflow channel 67. The cooling water that flows in the disc-like inflow damper 65 flows out from the outflow port 63 via the outflow channel 67. Accordingly, when the cooling water is at the second water level L2, the cooling water flows in the inflow damper 65 only from the lower inflow port 62. Therefore, after the cooling water in the inflow damper 65 flows in the inflow channel 68 after changing to a swirl flow, and thus a small amount of the cooling water flows out from the outflow port 63 of the accumulator 37.

That is, the accumulator 37 enables a large amount of the cooling water to be injected into the nuclear reactor 5 at an initial water injection time and a smaller amount of the cooling water than that at the initial water injection time to be injected into the nuclear reactor 5 without additionally using an actuation device.

This accumulator 37 is connected to the cold leg 6a via a second water injection pipe 71. A second water injection valve 72 and a plurality of check valves 73 are interposed in this second water injection pipe 71. The second water injection valve 72 is connected to the control device 32, and is controlled by the control device 32 to inject the cooling water into the primary cooling system 3 at the time of an occurrence of loss of the power supplied from the external power supply to the nuclear facility 1 and an accident in the nuclear facility 1. This second water injection valve 72 is in a constantly open state and is configured to supply the cooling water from the accumulator 37 to the primary cooling system 3 in response to reduction in pressure of the primary cooling system 3. Furthermore, the cooling water to be supplied from the accumulator 37 to the primary cooling system 3 is isolated by the check valves 73.

The graph of FIG. 5 is explained here. In the graph of FIG. 5, the horizontal axis indicates time and the vertical axis indicates flow volume. T1 indicates a required water-injection flow volume of the cooling water injected into the primary cooling system 3 necessary when the loss of the power from the external power supply and an accident in the nuclear facility 1 occur. T2 indicates a flow volume of the cooling water injected from the accumulator 37, and T3 indicates a flow volume of the cooling water injected from the water injection apparatus 36. As can be understood from this graph, the required water-injection flow volume T1 indicates that it is required to inject a large amount of cooling water right after the occurrence of the loss of the power supplied from the external power supply and an accident in the nuclear facility 1. After a certain period of time, the required water-injection flow volume T1 indicates that the required flow volume of the cooling water gradually decreases.

The injection flow volumes of the cooling water injected from the accumulator 37 and the water injection apparatus 36 are explained next. When loss of the power from the external power supply and an accident in the nuclear facility 1 occur, the accumulator 37 first injects a large amount of the cooling water into the primary cooling system 3 and then injects a small amount of the cooling water into the primary cooling system 3. On the other hand, when the loss of the power from the external power supply and an accident in the nuclear facility 1 occur, the water injection pump 51 of the water injection apparatus 36 is driven at a time when the power of the emergency power supply 35 reaches rated power. Accordingly, the water injection apparatus 36 injects the cooling water into the primary cooling system 3 when the accumulator 37 is injecting a small amount of cooling water into the primary cooling system 3. This creates a condition in which the injection from the accumulator 37 overlaps that from the water injection apparatus 36. After a certain period of time since the water injection apparatus 36 started injecting the cooling water, the accumulator 37 stops injecting the cooling water, and the water injection apparatus 36 becomes solely responsible for injecting the cooling water. At this time, each of the injection flow volumes T2 and T3 of the cooling water injected from the accumulator 37 and the water injection apparatus 36 always exceeds the required water-injection flow volume T1.

The separation valves 38 are so-called motor-operated valves, and as described above, the paired separation valves 38 are interposed in each of the steam pipe 21 and the feedwater pipe 26 across the wall of the containment vessel 10 to be located on the inside and the outside thereof. Many separation vales 38 are provided on pipes that communicate the interior of the containment vessel 10 with the exterior thereof, for example, pipes for the residual heat removal system, in addition to the steam pipe 21 and the feedwater pipe 26. That is, the separation valves 38 are provided in each of the many pipes and located on the inside and the outside of the containment vessel 10 so as to provide multiple redundancy. These separation valves 38 are connected to each of the control devices 32. The control device 32 controls the separation valves 38 to be closed at the time of the occurrence of the loss of the power from the external power supply and an accident in the nuclear facility 1, whereby the interior of the containment vessel 10 is separated from the exterior thereof.

With reference to FIG. 3, the emergency power supply system 33 of the nuclear facility 1 is explained next. FIG. 3 is the explanatory diagram of the emergency power supply system of the nuclear facility. Four emergency power supply systems 33 are provided in the nuclear facility 1 to correspond to the four emergency apparatuses 31, respectively. Because the four emergency power supply systems 33 are all equivalent in configuration, only one emergency power supply system 33 is explained below.

The emergency power supply system 33 includes an external power supply 81 serving as the main power supply, which supplies power to the nuclear facility 1, the gas turbine generator 35 serving as the emergency power supply, and a high-voltage bus bar (electric wire) 82, which is one of the emergency-power-supply bus bars and is connected to the external power supply 81 and the gas turbine generator 35.

The external power supply 81 is provided in two channels, one is the first external power supply 81a, which is normally used, and the other is the second external power supply 81b, which serves as a backup. A breaker S1 (first switch) is interposed in an electric circuit that connects the first external power supply 81a to the high-voltage bus bar 82, and a breaker S2 (first switch) is interposed in an electric circuit that connects the second external power supply 81b to the high-voltage bus bar 82.

The gas turbine generator 35 generates power through the combustion of sprayed liquid fuel, which rotates the turbine. The gas turbine generator 35 can be configured to make a device size necessary to generate predetermined power small, as compared with a diesel engine generator frequently used as an emergency power supply. The gas turbine generator 35 is easy to maintain as compared with the diesel engine generator. On the other hand, the gas turbine generator 35 has a characteristic that it takes a long starting time for generating the predetermined power, as compared with the diesel engine generator. This gas turbine generator 35 is provided outside of the containment vessel 10 and connected to the control device 32. When loss of the power from the external power supply occurs to the nuclear facility 1, the control device 32 starts the gas turbine generator 35. A breaker S3 (third switch) is interposed in an electric circuit that connects the gas turbine generator 35 to the high-voltage bus bar 82. This gas turbine generator 35 starts when the power is supplied from a battery 39 to be described later.

Accordingly, while the power is supplied to the high-voltage bus bar 82 from the external power supply 81 during a normal operation, the power is supplied thereto from the gas turbine generator 35 at the time of the loss of the power from the external power supply 81. A transformer 83 is connected to this high-voltage bus bar 82 via a breaker S4, and the water injection pump 51 is connected to the high-voltage bus bar 82 via a breaker S5. The water injection pump 51 can be driven by the power supplied from the high-pressure bus bar 82, and the transformer 83 drops the voltage of the high-voltage bus bar 82 and can supply power to a low-voltage bus bar 84 that is one of the emergency-power-supply bus bars. A breaker S6 is interposed between the transformer 83 and the low-voltage bus bar 84.

A low-voltage bus bar 85 that is one of the emergency-power-supply bus bars is further connected to this low-voltage bus bar 84 via breakers S7 and S8. The first water injection valve 52 and the second water injection valve 72 are connected to this low-voltage bus bar 85 via a valve-operation switch 91. Furthermore, a rectifier 86 is connected to the low-voltage bus bar 85 via a breaker S9, and the battery 39 is connected to the rectifier 86.

The battery 39 supplies power to the separation valves 38, the gas turbine generator 35 (specifically, the starting circuit for starting the gas turbine generator 35), and the control device 32. This battery 39 is charged during a normal operation of the nuclear facility 1. When the loss of the power supplied from the external power supply to the nuclear facility 1 occurs, the battery 39 supplies the charged power to the separation valves 38 and also supplies the charged power to the gas turbine generator 35 and the control device 32. Accordingly, the rectifier 86 converts AC power from the AC bus bar 85 into DC power. The resultant DC power is to be utilized and normally stored in the battery 39.

A DC bus bar 87 that is one of the emergency-power-supply bus bars is connected to this battery 39 via a breaker S10, and an inverter device 88 is connected to the DC bus bar 87 via a breaker S11 (second switch). The inverter device 88 converts the DC power from the DC bus bar 87 into AC power. A motor-operated-valve bus bar 89, which is one of the emergency-power-supply bus bars and supplies the AC power to motor-operated valves such as the separation valves 38, is connected to this inverter device 88. A plurality of separation valves 38 described above are connected to the motor-operated-valve bus bar 89 via valve-operation switchs 90. The gas turbine generator 35 is connected to this motor-operated-valve bus bar 89 via a switch S12. The breakers S1 to S11, the switch S12, and the valve-operation switches 90 and 91 described above are connected to the control device 32.

The control device 32 is configured to include a plurality of control boards, and examples of such control boards include a control board that can control water injection systems and a control board that can control power supply systems. The control device 32 is connected to the gas turbine generator 35, the water injection pump 51, a plurality of separation valves 38, the breakers S1 to S11, the switch S12, and the valve-operation switches 90 and 91. The control device 32 can control these for their startup and operation. The breakers S4, S6, S7, S8, S9, S10, and S11 are not particularly controlled but remain closed when the loss of the power from the external power supply 81 and the accident in the nuclear facility 1 occur. Furthermore, when the loss of the power from the external power supply 81 occurs, the power is supplied from the battery 39 via an electric circuit that connects the control device 32 to the motor-operated-valve bus bar 89.

Therefore, when supply of power from the first external power supply 81a and the second external power supply 81b is interrupted or an accident occurs in the nuclear facility 1, the control device 32 transmits signals to the various equipment and devices. Specifically, the control device 32 transmits a containment vessel separation signal for closing the valve-operation switch 90 to close the separation valves 38, a generator starting signal for closing the breaker S12 and controlling the gas turbine generator 35 to start power generation, a safety water-injection signal for closing the valve-operation switch 91 and opening the first water injection valve 52 and the second water injection valve 72, and an external-power-supply breaker opening signal for opening the breakers S1 and S2.

The valve-operation switch 90 connected to the motor-operated-valve bus bar 89 to which the battery 39 is connected via the breakers S10 and S11 is closed, and the separation valves 38 are then closed in response to the containment vessel separation signal transmitted from the control device 32. Simultaneously with this operation, the breakers S1 and S2 are opened in response to the external-power-supply breaker opening signal transmitted from the control device 32, thereby cutting off the connection of the external power supply 81 to the nuclear facility 1. Furthermore, the breaker S12 is closed and the power is supplied from the battery 39 for starting the gas turbine generator 35 in response to the generator starting signal transmitted from the control device 32, thereby starting the gas turbine generator 35. As described above, the second water injection valve 72 is constantly open, and the cooling water is supplied from the accumulator 37 into the primary cooling system 3 if the pressure in the primary cooling system 3 drops. Therefore, the safety water-injection signal is transmitted from the control device 32 in consideration of a case where the second water injection valve 72 is closed.

When the power of the started gas turbine generator 35 reaches the rated power, the control device 32 controls the breaker S3 to be closed, directing the power generated by the gas turbine generator 35 to the high-voltage bus bar 82. Thereafter, the control device 32 allows power to be supplied to the various equipment and devices connected to the high-voltage bus bar 82, the low-voltage bus bars 84 and 85, and the DC bus bar 87. At this time, if the power is supplied simultaneously to the various equipment and devices, loads on the gas turbine generator 35 suddenly increase. Therefore, the control device 32 sequentially allows power to be supplied to the various equipment and devices according to the power supply priorities. Accordingly, when the power is supplied from the gas turbine generator 35 to the high-voltage bus bar 82, the control device 32 starts the water injection pump 51 by closing the breaker S5 based on the predetermined priorities. When the water injection pump 51 is running, the water injection apparatus 36 pumps up the cooling water from the water storage pit 45 and injects the cooling water into the primary cooling system 3 via the first water injection pipe 50.

According to the configuration described above, in the emergency system 30, when loss of the power from the external power supply 81 and an accident in the nuclear facility 1 occur, the control device 32 can allow the power from the battery 39 to be supplied to the separation valves 38 and control the respective separation valves 38 to be closed. Therefore, in the emergency system 30, the separation valves 38 can be promptly closed before the power of the gas turbine generator 35 reaches the rated power, so that it is possible to swiftly separate the interior of the containment vessel 10 from the exterior thereof.

At the time of an occurrence of the loss of the power from the external power supply 81 and an accident in the nuclear facility 1, the accumulator 37 can inject the cooling water into the primary cooling system 3 via the second water injection valve 72. With this configuration, even when the loss of the power from the external power supply 81 occurs, it is possible to cool the nuclear reactor 5 and to safely stop the operation of the nuclear facility 1. The accumulator 37 according to the present embodiment injects the pressurized cooling water stored in the airtight container 57 with the help of the hydraulic head pressure. The accumulator 37 is provided at a higher elevation than the nuclear reactor 5 is.

The accumulator 37 can inject the cooling water into the primary cooling system 3 at the flow volume exceeding the required water-injection flow volume T1 required when injecting the cooling water into the primary cooling system 3. Accordingly, at the time of the occurrence of the loss of the power from the external power supply 81 and an accident in the nuclear facility 1, the accumulator 37 can appropriately inject the cooling water into the nuclear reactor 5.

After the occurrence of the loss of the power from the external power supply 81 and an accident in the nuclear facility 1, when the power of the gas turbine generator 35 reaches the rated power, the control device 32 starts the water injection pump 51. Accordingly, the water injection apparatus 36 can stably inject the cooling water into the primary cooling system 3 with the power supplied from the gas turbine generator 35. In the present embodiment, not the steam turbine generators but only the gas turbine generators 35 are used as the emergency power supplies.

By providing more than one emergency apparatus 31, even when one of the emergency apparatuses does not operate due to a failure or the like, the rest of the emergency apparatuses 31 can operate, so that it is possible to ensure the safety of the nuclear facility 1. Specifically, the four gas turbine generators 35 provided in the four respective emergency power supply systems 33 are equivalent in power generation capability. When the loss of the power from the external power supply to the nuclear facility 1 occurs, the power generation capabilities of the two gas turbine generators 35 ensure supplying the power to load apparatuses necessary for the safety of the nuclear facility 1. Accordingly, even when one of the four gas turbine generators 35 is taken off-line for maintenance and another one fails, it is still possible to handle the occurrence of the loss of the power from the external power supply 81 and the accident in the nuclear facility 1.

In the present embodiment, the control device 32 starts the water injection pump 51 by closing the breaker S5. However, the method of starting the water injection pump 51 is not limited thereto. For example, the control device 32 can start the water injection pump 51 by closing the breaker S5 and sending an actuation signal to the water injection pump 51. Furthermore, signals sent out from the control device 32 can appropriately be reconfigured according to the configuration of the emergency apparatus 31.

### Industrial Applicability

As described above, the emergency system according to the present invention is useful at the time of loss of power from an external power supply of a nuclear facility and an accident in the nuclear facility, and is particularly suitable for a case where the interior and the exterior of the containment vessel are to be swiftly separated from each other.

### Reference Signs List

1 nuclear facility
3 primary cooling system
5 nuclear reactor
7 steam generator
8 pressurizer
9 coolant pump
10 containment vessel
20 secondary cooling system
21 steam pipe
26 feedwater pipe
30 emergency system
31 emergency apparatus
33 emergency power supply system
32 control device
35 gas turbine generator (emergency power supply)
36 water injection apparatus
37 accumulator
38 separation valve
39 battery
45 water storage pit
51 water injection pump
52 first water injection valve
72 second water injection valve
81 external power supply
T1 required water-injection flow volume
T2 flow volume from accumulator
T3 flow volume from water injection apparatus

## Claims

1. An emergency system capable of supplying power to a nuclear facility including a containment vessel in which a nuclear reactor can be contained, when loss of power from an external power supply that can supply the power to the nuclear facility occurs, the emergency system comprising:
a gas turbine generator serving as an emergency power supply that can supply power to the nuclear facility;
a separation valve that can separate an interior and an exterior of the containment vessel from each other at a time of an accident in the nuclear facility;
a battery that can supply power to the separation valve at a time of loss of the power from the external power supply; and
a control device that can control operations of the gas turbine generator and the separation valve, wherein
when loss of the power from the external power supply and an accident in the nuclear facility occur, the control device starts the gas turbine generator and closes the separation valve to which the power is supplied from the battery.

2. The emergency system according to claim 1, further comprising:
an accumulator that can store cooling water in a pressurized state in an airtight container; and
a water injection valve interposed in a channel from the accumulator to the nuclear reactor, wherein
at a time of an accident in the nuclear facility, the accumulator injects the cooling water in the pressurized state into the nuclear reactor via the water injection valve.

3. The emergency system according to claim 2, wherein the accumulator is configured to be able to change a flow volume of the cooling water to be injected in multiple stages.

4. The emergency system according to claim 2 or 3, further comprising:
a first switch that can open and close an electric circuit that connects the external power supply to an electric wire that can distribute power into the nuclear facility; and
a second switch that can open and close an electric circuit that connects the battery to the separation valve, wherein
the control device transmits, when loss of the power from the external power supply and an accident in the nuclear facility occur, a containment vessel separation signal for closing the second switch and closing the separation valve with power supplied from the battery to separate the interior and the exterior of the containment vessel from each other, a generator starting signal for starting the gas turbine generator for power generation, a safety water-injection signal for opening the water injection valve and injecting the cooling water in the pressurized state into the nuclear reactor, and an external-power-supply cutoff signal for opening the first switch and cutting off the power from the external power supply to the nuclear facility.

5. The emergency system according to claim 4, further comprising a third switch that can open and close an electric circuit that connects the gas turbine generator to the electric wire, wherein
the control device closes the third switch and supplies power from the gas turbine generator to the electric wire when the power of the gas turbine generator reaches a rated power after transmitting the generator starting signal.

6. The emergency system according to any one of claims 1 to 5, further comprising a water injection apparatus including a pump that can feed cooling water toward the nuclear reactor, wherein
the pump can be driven with the power supplied from the gas turbine generator, and
the control device starts the pump when the power of the gas turbine generator reaches the rated power.

7. The emergency system according to any one of claims 1 to 6, wherein
the emergency apparatus is an apparatus that includes at least the gas turbine generator, the separation valve, and the battery, and
a plurality of the emergency apparatuses are provided.
